# EUROPEAN PATENT APPLICATION

(11) **EP 4 807 619 A1**
(43) Date of publication of application: **16.09.2026**
(21) Application number: 25773802.1
(22) Date of filing: 21.02.2025
(51) Int. Cl.: G06F 40/44, G06F 40/58, G10L 15/00

(54) **INFORMATION PROCESSING METHOD, INFORMATION PROCESSING SYSTEM, AND PROGRAM**

(30) Priority: 21.03.2024 JP 2024044584
(71) Applicant: YAMAHA CORPORATION, Hamamatsu-shi, Shizuoka 430-8650 (JP)
(72) Inventor: IMOTO Tomohiro, Hamamatsu-shi, Shizuoka 430-8650 (JP); SETO Yuki, Hamamatsu-shi, Shizuoka 430-8650 (JP)
(74) Representative: Hoffmann Eitle
(86) International application number: PCT/JP2025/006142
(87) International publication number: WO 2025/197430

(57) **Abstract**

This information processing system includes: an information generation unit that generates instruction information containing a first character string in which lyrics of a musical piece, sound of content, or text of a comic book is expressed in a first language and a constraint condition related to the length of a character string; and an information acquisition unit that acquires a second character string which is generated as a result of the processing of the instruction information by a trained generation model, the second character string resulting from conversion of the first character string into a second language different from the first language, under the constraint condition.

## Description

### TECHNICAL FIELD

The present disclosure relates to a translation technique.

### BACKGROUND ART

A machine translation technique for converting a character string expressed in a specific language into another language is proposed. For example, Patent Literature 1 discloses a technique for generating a translation of lyrics using a translation corresponding to music information such as music genre or singer gender.

### CITATION LIST

### PATENT LITERATURE

Patent Literature 1: JP2001-075963A

### SUMMARY OF INVENTION

### TECHNICAL PROBLEM

However, with only a configuration using a translation corresponding to music genre or singer gender, for example, a translation excessively long for a song may be generated, and the translation may not be appropriate as lyrics sung in parallel with performance of the song. The above description focuses on translation of lyrics, and the same problem may occur in translation of character strings other than lyrics. For example, even in a case of translating lines placed in bubbles in comics, for example, a translation excessively long for a size of a bubble may be generated, and as a result, the translation may fail to be appropriately arranged in the bubble. In consideration of the above circumstances, an object of one aspect of the present disclosure is to reduce a probability that a generated character string after language conversion is excessively long or short for an environment in which the character string is output.

### SOLUTION TO PROBLEM

To solve the above problem, an information processing method according to one aspect of the present disclosure includes generating instruction information including a first character string expressing lyrics of a song, audio of a content, or lines of a comic in a first language and a constraint condition related to a length of the character string, and acquiring a second character string generated by a trained generation model processing the instruction information, the second character string being obtained by converting the first character string into a second language different from the first language under the constraint condition.

An information processing system according to one aspect of the present disclosure includes an information generation unit configured to generate instruction information including a first character string expressing lyrics of a song, audio of a content, or a line of a comic in a first language and a constraint condition related to a length of a character string, and an information acquisition unit configured to acquire a second character string generated by a trained generation model processing the instruction information, the second character string being obtained by converting the first character string into a second language different from the first language under the constraint condition.

A program according to one aspect of the present disclosure causes a computer system to function as an information generation unit configured to generate instruction information including a first character string expressing lyrics of a song, audio of a content, or a line of a comic in a first language and a constraint condition related to a length of a character string, and an information acquisition unit configured to acquire a second character string generated by a trained generation model processing the instruction information, the second character string being obtained by converting the first character string into a second language different from the first language under the constraint condition.

### BRIEF DESCRIPTION OF DRAWINGS

FIG. 1 is a block diagram of an information system according to a first embodiment.
FIG. 2 is a block diagram of a terminal device.
FIG. 3 is a block diagram showing a functional configuration of the terminal device.
FIG. 4 is a flowchart of a translation process.
FIG. 5 is a block diagram showing a functional configuration of the terminal device according to a second embodiment.
FIG. 6 is a flowchart of a translation process according to the second embodiment.
FIG. 7 is a block diagram showing a functional configuration of the terminal device according to a third embodiment.
FIG. 8 is a schematic diagram related to a relationship between an image and a line in comic data.
FIG. 9 is a flowchart of a translation process according to the third embodiment.

### DESCRIPTION OF EMBODIMENTS

### A: First Embodiment

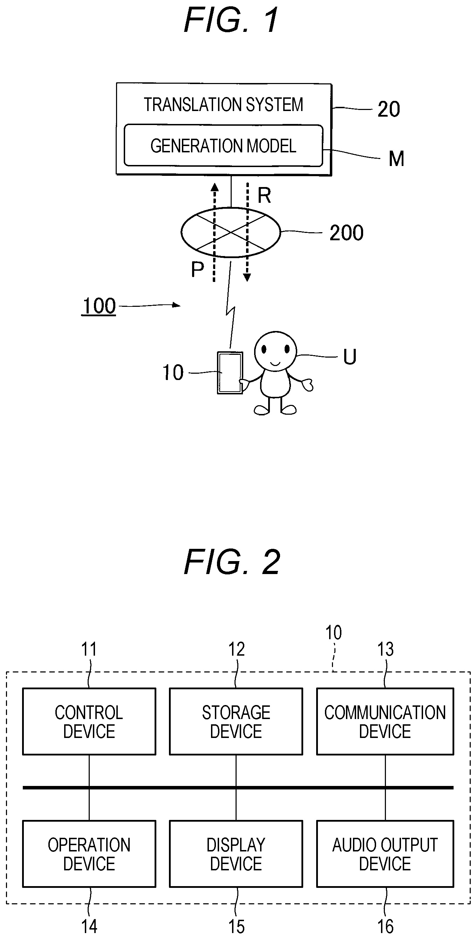

FIG. 1 is a block diagram showing a configuration of an information system 100 according to a first embodiment. The information system 100 includes a terminal device 10 and a translation system 20. The terminal device 10 is an information processing system used by a user U. A portable information device such as a smartphone, a tablet terminal, or a personal computer is exemplified as the terminal device 10. The terminal device 10 can communicate with the translation system 20 via a communication network 200 such as the Internet.

FIG. 2 is a block diagram of the terminal device 10. The terminal device 10 includes a control device 11, a storage device 12, a communication device 13, an operation device 14, a display device 15, and an audio output device 16. The terminal device 10 may be implemented as a single device, or be implemented as a plurality of separate devices.

The control device 11 includes one or more processors that control elements of the terminal device 10. For example, the control device 11 is implemented by one or more types of processors such as a central processing unit (CPU), a sound processing unit (SPU), a digital signal processor (DSP), a field programmable gate array (FPGA), or an application specific integrated circuit (ASIC). The communication device 13 communicates with the translation system 20 under control of the control device 11.

The storage device 12 includes one or more memories that store programs executed by the control device 11 and various types of data used by the control device 11. The storage device 12 includes a known recording medium such as a magnetic recording medium or a semiconductor recording medium. The storage device 12 may be implemented by a combination of a plurality of types of recording media. For example, a portable recording medium detachable from the terminal device 10 or a recording medium (for example, a cloud storage) readable and writable by the control device 11 via the communication network 200 may be used as the storage device 12.

The operation device 14 is an input device that receives an instruction from the user U. The operation device 14 includes, for example, an operator operated by the user U or a touch panel that detects contact by the user U. The display device 15 displays images under control of the control device 11. The display device 15 includes a display panel such as a liquid crystal panel or an organic EL panel. The audio output device 16 plays sound waves under control of the control device 11. The audio output device 16 is, for example, a speaker or headphones.

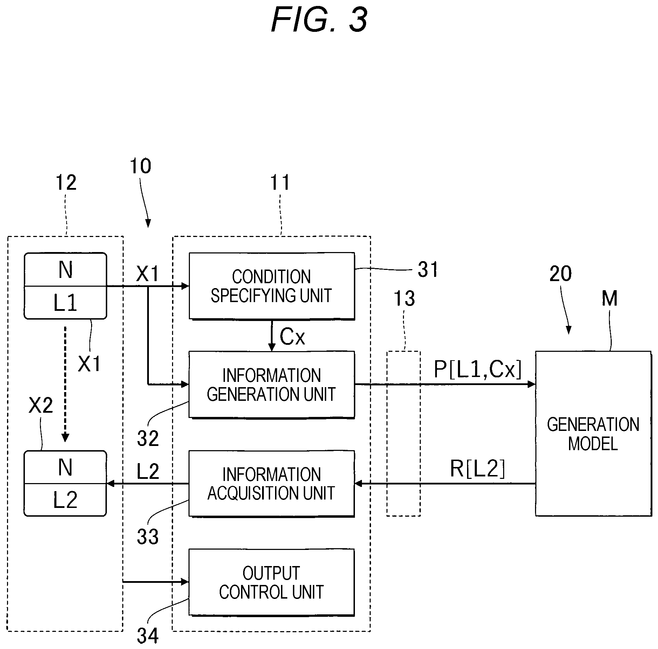

FIG. 3 is a block diagram showing a functional configuration of the terminal device 10. The control device 11 implements a plurality of functions (condition specifying unit 31, information generation unit 32, information acquisition unit 33, output control unit 34) by executing programs stored in the storage device 12.

The storage device 12 according to the first embodiment stores song data X1. The song data X1 is data representing a score of a song. For example, the song data X1 is a music file conforming to a Musical Instrument Digital Interface (MIDI) standard. Specifically, the song data X1 includes a sequence of notes N and lyrics L1 of the song. The sequence of notes N is a time series of a plurality of notes constituting the song. The song data X1 specifies a pitch and a period of each note constituting the sequence of notes N.

The lyrics L1 are a time series of characters corresponding to notes of the sequence of notes N. That is, the lyrics L1 temporally correspond to the sequence of notes N. For example, one syllable constituting the lyrics L1 is assigned to one note of the sequence of notes N. The lyrics L1 according to the first embodiment is a character string expressed in a first language. The first language is, for example, Japanese.

The translation system 20 in FIG. 1 is a machine translation device that converts the lyrics L1 expressed in the first language into lyrics L2 expressed in a second language. The second language is different from the first language. The second language is, for example, English. That is, the translation system 20 generates the lyrics L2 by converting a language of the lyrics L1. The lyrics L1 are an example of a "first character string", and the lyrics L2 are an example of a "second character string".

The condition specifying unit 31 in FIG. 2 specifies a constraint condition Cx from the song data X1. The constraint condition Cx is a condition related to a length of the lyrics L2 after translation. The condition specifying unit 31 according to the first embodiment is set according to a time length of each syllable constituting the lyrics L1. Specifically, the condition specifying unit 31 sets the constraint condition Cx according to a total time length (hereinafter referred to as "singing time") related to a plurality of syllables constituting the lyrics L1. The time length of each syllable is a time length of a period of a note to which the syllable is assigned in the sequence of notes N. For example, the number of characters that can be spoken within a range of the singing time of the lyrics L1 is set as the constraint condition Cx. As described above, the constraint condition Cx is a temporal condition related to the lyrics L2.

As described above, the sequence of notes N of the song data X1 is accompanying information for specifying the constraint condition Cx. The accompanying information is information different from the lyrics L1, and is provided in association with the lyrics L1. The sequence of notes N according to the first embodiment is also expressed as accompanying information used for playing the lyrics L1, accompanying information played together with the lyrics L1, or accompanying information defining a condition for playing the lyrics L1. On the other hand, the sequence of notes N (accompanying information) is not information directly specifying a length of the lyrics L2 or information dedicated to setting the length of the lyrics L2.

The information generation unit 32 generates instruction information P. The instruction information P is a prompt for instructing translation of the lyrics L1. Specifically, the information generation unit 32 generates the instruction information P including the lyrics L1 and the constraint condition Cx. For example, the instruction information P is a prompt in a natural language that requests conversion of the lyrics L1 from the first language to the second language under the constraint condition Cx. For example, the instruction information P is a prompt representing a request "please translate Japanese lyrics (lyrics L1) into English under (constraint condition Cx)".

The information generation unit 32 transmits the instruction information P exemplified above from the communication device 13 to the translation system 20. The translation system 20 generates response information R by processing the instruction information P received from the terminal device 10, and transmits the response information R to the terminal device 10. The response information R is information including the lyrics L2. The lyrics L2 are a character string obtained by converting the lyrics L1 from the first language to the second language under the constraint condition Cx. That is, for example, the lyrics L2 in the second language are generated, in which a singing time satisfies the constraint condition Cx while maintaining a meaning of the lyrics L1.

The translation system 20 generates the response information R by processing the instruction information P using a trained generation model M. The generation model M is a generative probability model that generates the response information R corresponding to the instruction information P. The generation model M has learned a tendency of the response information R to the instruction information P by pre-trained machine learning.

Specifically, the generation model M is, for example, an interactive large language model (LLM) trained specifically for a natural language processing task such as machine translation. For example, a natural language processing model implemented by a transformer model using a self-attention mechanism is exemplified as the generation model M.

As described above, the response information R (lyrics L2) is a character string generated by the trained generation model M processing the instruction information P. Specifically, the lyrics L2 are a character string in the second language expressed in a singing time satisfying the constraint condition Cx relative to the singing time of the lyrics L1. For example, the lyrics L2 having the same singing time as the singing time of the lyrics L1 are generated. Therefore, even when the lyrics L1 are common, the longer the singing time of the lyrics L1, the larger the number of characters of the lyrics L2.

The information acquisition unit 33 acquires the response information R (lyrics L2). Specifically, the information acquisition unit 33 receives the response information R transmitted from the translation system 20 by the communication device 13. The information acquisition unit 33 generates new song data X2 by combining the sequence of notes N of the existing song data X1 and the lyrics L2 of the response information R. As described above, the song data X2 is generated by replacing the lyrics L1 in the first language with the lyrics L2 in the second language while maintaining the sequence of notes N in the song data X1. The information acquisition unit 33 stores the song data X2 in the storage device 12.

The output control unit 34 controls the audio output device 16 to play the song data X1 or the song data X2. For example, when playing of the song data X1 is instructed by the user U, the output control unit 34 controls the audio output device 16 to play a song represented by the song data X1. A played sound of the song data X1 is a mixed sound of an instrument sound corresponding to the sequence of notes N of the song data X1 and a vocal sound obtained by singing the lyrics L1 of the first language at pitches corresponding to the sequence of notes N. On the other hand, when playing of the song data X2 is instructed by the user U, the output control unit 34 controls the audio output device 16 to play a song represented by the song data X2. A played sound of the song data X2 is a mixed sound of an instrument sound corresponding to the sequence of notes N of the song data X2 and a vocal sound obtained by singing the lyrics L2 of the second language at pitches corresponding to the sequence of notes N. A freely selected known speech synthesis technique may be employed to generate a vocal sound represented by the lyrics L1 or L2.

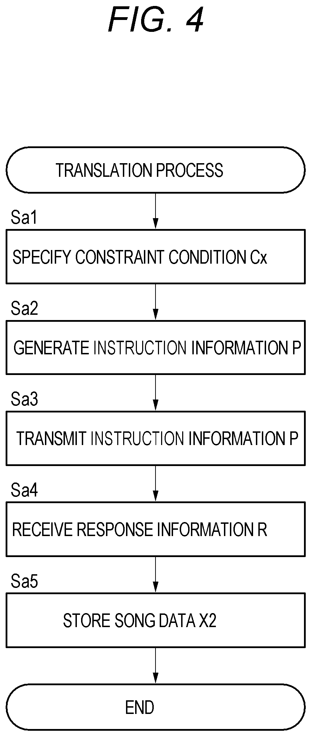

FIG. 4 is a flowchart of a process executed by the control device 11 (hereinafter referred to as "translation process"). The translation process is started with an instruction from the user U to the operation device 14 as a trigger. When the translation process is started, the control device 11 (condition specifying unit 31) specifies the constraint condition Cx from the song data X1 stored in the storage device 12 (Sa1).

The control device 11 (information generation unit 32) generates the instruction information P including the lyrics L1 and the constraint condition Cx (Sa2), and transmits the instruction information P to the translation system 20 by the communication device 13 (Sa3). The translation system 20 generates the lyrics L2 by processing the instruction information P with the generation model M, and transmits the response information R including the lyrics L2 to the terminal device 10.

The control device 11 (information acquisition unit 33) receives the response information R transmitted from the translation system 20 by the communication device 13 (Sa4). The control device 11 (information acquisition unit 33) generates the song data X2 including the sequence of notes N of the song data X1 and the lyrics L2 of the response information R, and stores the song data X2 in the storage device 12 (Sa5).

As described above, in the first embodiment, by processing the instruction information P including the constraint condition Cx in addition to the lyrics L1 to be converted by the generation model M, the lyrics L2 obtained by converting the lyrics L1 from the first language to the second language under the constraint condition Cx are generated. Therefore, it is possible to reduce a probability that the generated lyrics L2 are excessively long or short relative to the sequence of notes N corresponding to the lyrics L1.

In the first embodiment, particularly, the lyrics L2 are generated under the constraint condition Cx related to a singing time. Therefore, it is possible to reduce a probability that the singing time of the generated lyrics L2 is excessively deviated from the singing time of the lyrics L1. That is, it is possible to generate the lyrics L2 in the second language that allows the existing song to be easily sung. For example, the generated lyrics L2 can be sung within a period for the song to be played.

In the first embodiment, the constraint condition Cx is specified from the song data X1 including the lyrics L1. That is, the song data X1 is shared for specifying the lyrics L1 and specifying the constraint condition Cx. Therefore, it is possible to simplify a configuration and a process necessary for generating the lyrics L2 as compared with a form in which the constraint condition Cx is specified from an element different from the song data X1.

### B: Second Embodiment

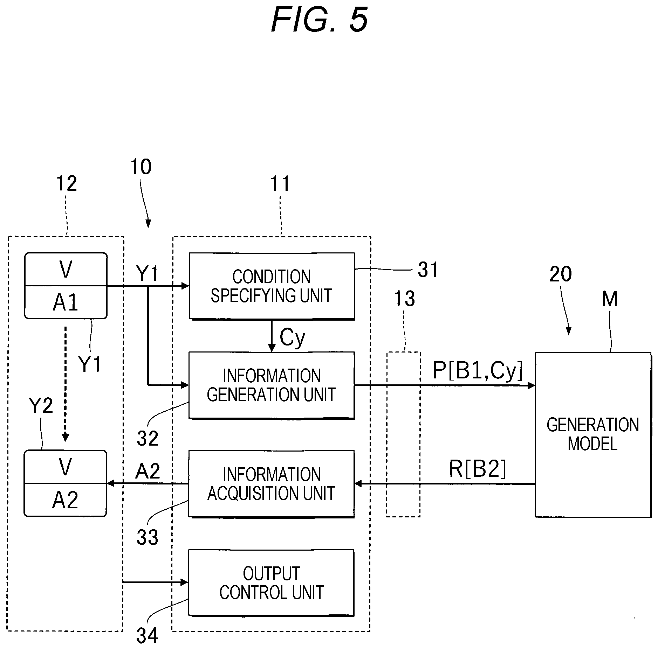

FIG. 5 is a block diagram showing a functional configuration of the terminal device 10 according to a second embodiment. The control device 11 implements a plurality of functions (condition specifying unit 31, information generation unit 32, information acquisition unit 33, output control unit 34) by executing programs stored in the storage device 12.

The storage device 12 according to the second embodiment stores a content Y1. The content Y1 is various media distributed or sold for viewing by a large number of viewers, and includes video V and audio A1. The video V is live-action video captured by an imaging device, or video such as animation created using computer graphics. The audio A1 is sound played in parallel with the video V. That is, the audio A1 temporally corresponds to the video V. The audio A1 is spoken in a first language (for example, Japanese). The content Y1 may be an audio content that does not include the video V (for example, podcast or audio book).

The translation system 20 according to the second embodiment converts a character string B1 in the first language represented by the audio A1 into a character string B2 expressed in a second language. The character string B1 is an example of "a first character string", and the character string B2 is an example of "a second character string".

The condition specifying unit 31 specifies a constraint condition Cy from the content Y1. The constraint condition Cy is a condition related to a length of the character string B2 after translation. The constraint condition Cy according to the second embodiment is a condition related to a time length of a speech period when the character string B2 is spoken. The condition specifying unit 31 sets the constraint condition Cy according to a time length of a speech period of the audio A1 (character string B1). For example, the number of characters that can be spoken within the speech period of the audio A1 is set as the constraint condition Cy.

The speech period of the audio A1 is a period in which the audio A1 is present in the content Y1. For example, a period in which speech audio is observed at a volume exceeding a predetermined threshold is exemplified as the speech period. Specifically, the speech period is a period from a time point at which playing of a phrase of the audio A1 is started to a time point at which playing of the phrase is ended. A period from the time point at which playing of a phrase of the audio A1 is started to a time point at which playing of an immediately subsequent phrase is started may also be specified as the speech period. As described above, the audio A1 of the content Y1 is accompanying information for specifying the constraint condition Cy.

The information generation unit 32 generates the instruction information P. The instruction information P according to the second embodiment is a prompt for instructing translation of the character string B1 represented by the audio A1. Specifically, the information generation unit 32 generates the instruction information P including the character string B1 and the constraint condition Cy. The instruction information P is a prompt in a natural language that requests conversion of the character string B1 from the first language to the second language under the constraint condition Cy. For example, the instruction information P is a prompt representing a request "please translate a Japanese sentence (character string B1) into English under (constraint condition Cy)". The information generation unit 32 estimates the character string B1 by audio recognition on the audio A1 of the content Y1. For the estimation of the character string B1, a known audio recognition technique is freely adopted.

The information generation unit 32 transmits the instruction information P exemplified above from the communication device 13 to the translation system 20. The translation system 20 generates the response information R by processing the instruction information P received from the terminal device 10, and transmits the response information R to the terminal device 10. The response information R is information including the character string B2. The character string B2 is a character string obtained by converting the character string B1 from the first language to the second language under the constraint condition Cy. That is, for example, the character string B2 in the second language is generated, in which a time length during speech satisfies the constraint condition Cy while maintaining a meaning of the character string B1.

As described above, the response information R (character string B2) is a character string generated by the trained generation model M processing the instruction information P. Specifically, the character string B2 is a character string in the second language that can be spoken in a time length satisfying the constraint condition Cy relative to the time length of the speech period in the content Y1. For example, the character string B2 spoken in a time length equivalent to the speech period of the audio A1 is generated. Therefore, even when the character string B1 is common, the larger the time length of the speech period of the audio A1, the larger the number of characters of the character string B2.

The information acquisition unit 33 acquires the response information R (character string B2). Specifically, the information acquisition unit 33 receives the response information R transmitted from the translation system 20 by the communication device 13. The information acquisition unit 33 generates a new content Y2 by a combination of the video V of the existing content Y1 and audio A2 representing the character string B2 of the response information R. The audio A2 is audio of the character string B2. A known speech synthesis technique is freely adopted to generate the audio A2. As described above, the content Y2 is generated by replacing the audio A1 in the first language with the audio A2 in the second language while maintaining the video V in the content Y1. The information acquisition unit 33 stores the content Y2 in the storage device 12.

The output control unit 34 plays the content Y1 or the content Y2. For example, when playing of the content Y1 is instructed by the user U, the output control unit 34 controls the display device 15 to play the video V of the content Y1 and controls the audio output device 16 to play the audio A1 in the first language. On the other hand, when playing of the content Y2 is instructed by the user U, the output control unit 34 controls the display device 15 to play the video V of the content Y2 and controls the audio output device 16 to play the audio A2 in the second language.

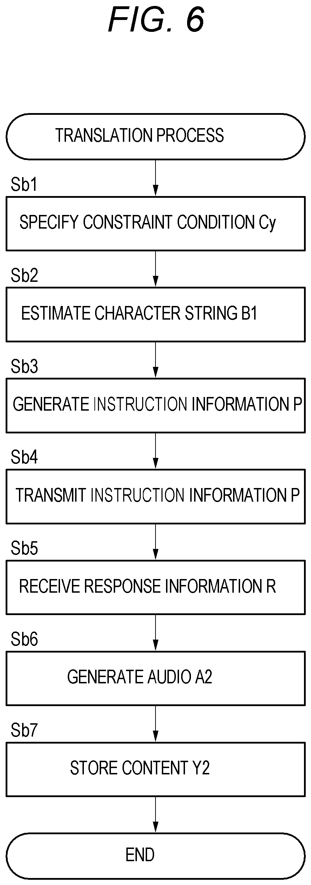

FIG. 6 is a flowchart of a translation process according to the second embodiment. When the translation process is started, the control device 11 (condition specifying unit 31) specifies the constraint condition Cy from the content Y1 stored in the storage device 12 (Sb1).

The control device 11 (information generation unit 32) estimates the character string B1 by audio recognition on the audio A1 (Sb2). The control device 11 (information generation unit 32) generates the instruction information P including the character string B1 and the constraint condition Cy (Sb3), and transmits the instruction information P to the translation system 20 by the communication device 13 (Sb4). The translation system 20 generates the character string B2 by processing the instruction information P with the generation model M, and transmits the response information R including the character string B2 to the terminal device 10.

The control device 11 (information acquisition unit 33) receives the response information R transmitted from the translation system 20 by the communication device 13 (Sb5). The control device 11 (information acquisition unit 33) generates the audio A2 by audio synthesis processing on the character string B2 (Sb6). The control device 11 (information acquisition unit 33) generates the content Y2 including the video V of the content Y1 and the synthesized audio A2 and stores the content Y2 in the storage device 12 (Sb7).

As described above, in the second embodiment, by processing the instruction information P including the constraint condition Cy in addition to the character string B2 to be converted by the generation model M, the character string B2 obtained by converting the character string B1 from the first language to the second language under the constraint condition Cy is generated. Therefore, it is possible to reduce a probability that the generated character string B2 is excessively long or short relative to the video V corresponding to the character string B1.

In the second embodiment, particularly, the character string B2 is generated under the constraint condition Cy related to the time length of the speech period in the content Y1. Therefore, it is possible to reduce the probability that the generated character string B2 is excessively long for the video V of the content Y1. That is, it is easy to temporally associate playing of the video V with playing of the audio A2 (character string B2) in the content Y1.

In the second embodiment, the constraint condition Cy is specified from the content Y1 including the audio A1. That is, the content Y1 is shared for specifying the character string B1 and specifying the constraint condition Cy. Therefore, it is possible to simplify a configuration and a process necessary for generating the character string B2 as compared with a form in which the constraint condition Cy is specified from an element different from the content Y1.

### C: Third Embodiment

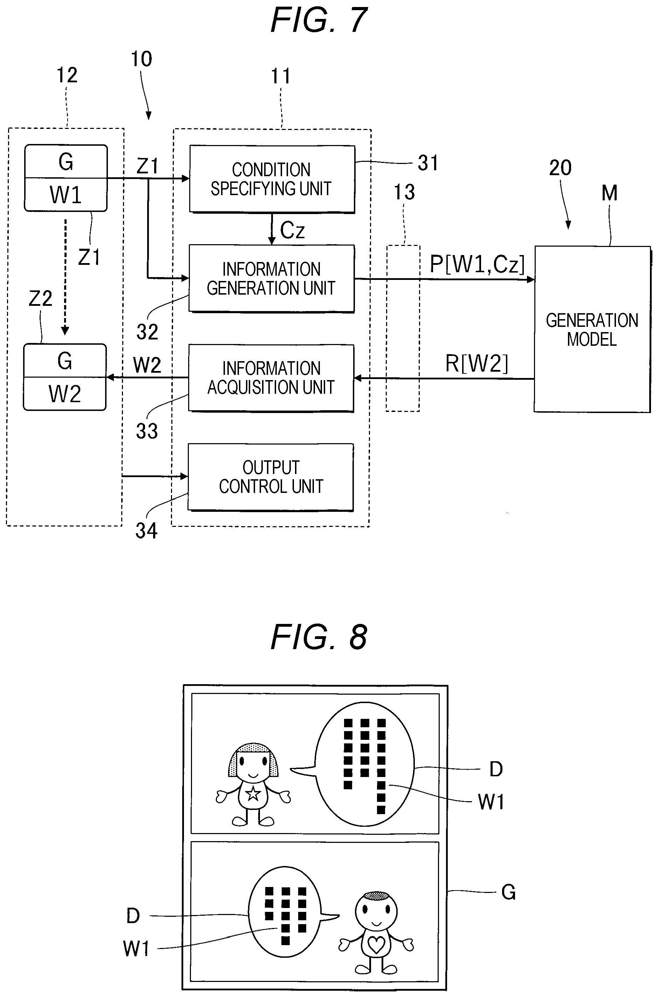

FIG. 7 is a block diagram showing a functional configuration of the terminal device 10 according to a third embodiment. The control device 11 implements a plurality of functions (condition specifying unit 31, information generation unit 32, information acquisition unit 33, output control unit 34) by executing programs stored in the storage device 12.

The storage device 12 according to the third embodiment stores comic data Z1 representing a comic. The comic data Z1 includes an image G and a line W1. The line W1 is a dialogue in a comic, and a character string representing speech of a person appearing in the comic.

FIG. 8 is a schematic diagram of the image G and the line W1. A character region D is arranged in the comic image G. The line W1 is arranged in the character region D. The character region D is a bubble arranged in an appropriate size and shape in the comic image G. The line W1 is a character string expressed in a first language (for example, Japanese).

The translation system 20 according to the third embodiment converts the line W1 expressed in the first language into a line W2 expressed in a second language. The line W1 is an example of "a first character string", and the line W2 is an example of "a second character string".

The condition specifying unit 31 in FIG. 7 specifies a constraint condition Cz from the comic data Z1. The constraint condition Cz is a condition related to a length of the line W2 after translation. The constraint condition Cz according to the third embodiment is a condition corresponding to the size of the character region D in which the line W1 is arranged in the image G. The condition specifying unit 31 specifies the size of the character region D in which the line W1 is arranged, and sets the constraint condition Cz according to the size of the character region D. For example, the number of characters of the line W1 that can be arranged in the character region D is set as the constraint condition Cz of the line W2.

As described above, the image G (character region D) of the comic data Z1 is accompanying information for specifying the constraint condition Cz. The accompanying information is information of a type different from that of the line W1 and is provided in association with the line W1. The image G according to the third embodiment is also expressed as accompanying information used for displaying the line W1, accompanying information displayed together with the line W1, or accompanying information defining a condition for displaying the line W1. On the other hand, the image G (character region D) is not information directly designating a length of the line W2 or information dedicated to setting the length of the line W2.

The information generation unit 32 generates the instruction information P. The instruction information P according to the third embodiment is a prompt for instructing translation of the line W1. Specifically, the information generation unit 32 generates the instruction information P including the line W1 and the constraint condition Cz. For example, the instruction information P is a prompt in a natural language that requests conversion of the line W1 from the first language to the second language under the constraint condition Cz. For example, the instruction information P is a prompt representing a request "please translate a Japanese sentence (line W1) into English under (constraint condition Cz)".

The information generation unit 32 transmits the instruction information P exemplified above from the communication device 13 to the translation system 20. The translation system 20 generates the response information R by processing the instruction information P received from the terminal device 10, and transmits the response information R to the terminal device 10. The response information R is information including the line W2. The line W2 is a character string obtained by converting the line W1 from the first language to the second language under the constraint condition Cz. That is, for example, the line W2 in the second language is generated, in which the number of characters satisfies the constraint condition Cz while maintaining a meaning of the line W1.

As described above, the response information R (line W2) is a character string generated by the trained generation model M processing the instruction information P. Specifically, the line W2 is a character string in the second language expressed by the number of characters satisfying the constraint condition Cz relative to the size of the character region D in which the line W1 is arranged. For example, the line W2 that has the number of characters that can be arranged in the character region D having the same size as the character region D of the line W1 is generated. Therefore, even when the line W1 is common, the larger the size of the character region D of the line W1, the larger the number of characters of the line W2.

The information acquisition unit 33 acquires the response information R (line W2). Specifically, the information acquisition unit 33 receives the response information R transmitted from the translation system 20 by the communication device 13. Further, the information acquisition unit 33 generates new comic data Z2 by a combination of the image G of the existing comic data Z1 and the line W2 of the response information R. As described above, the comic data Z2 is generated by replacing the line W1 in the first language with the line W2 in the second language while maintaining the image G in the comic data Z1. The information acquisition unit 33 stores the comic data Z2 in the storage device 12.

The output control unit 34 plays the comic data Z1 or the comic data Z2. For example, when playing of the comic data Z1 is instructed by the user U, the output control unit 34 controls the display device 15 to display the image G of the comic data Z1 and the line W1 in the first language arranged in the character region D. On the other hand, when playing of the comic data Z2 is instructed by the user U, the output control unit 34 controls the display device 15 to display the image G of the comic data Z2 and the line W2 in the second language arranged in the character region D.

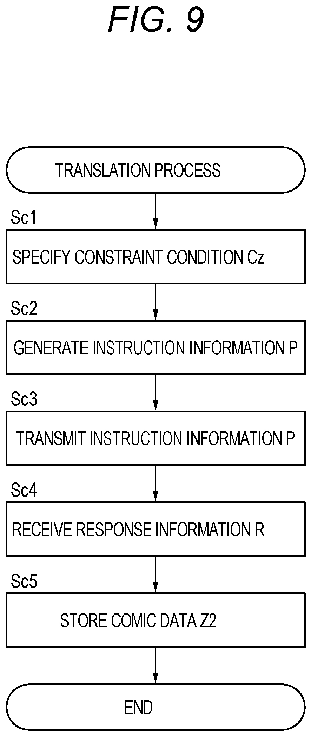

FIG. 9 is a flowchart of a translation process according to the third embodiment. When the translation process is started, the control device 11 (condition specifying unit 31) specifies the constraint condition Cz from the comic data Z1 stored in the storage device 12 (Sc1).

The control device 11 (information generation unit 32) generates the instruction information P including the line W1 and the constraint condition Cz (Sc2), and transmits the instruction information P to the translation system 20 by the communication device 13 (Sc3). The translation system 20 generates the line W2 by processing the instruction information P with the generation model M, and transmits the response information R including the line W2 to the terminal device 10.

The control device 11 (information acquisition unit 33) receives the response information R transmitted from the translation system 20 by the communication device 13 (Sc4). The control device 11 (information acquisition unit 33) generates the comic data Z2 including the image G of the comic data Z1 and the line W2 after translation and stores the comic data Z2 in the storage device 12 (Sc5).

As described above, in the third embodiment, by processing the instruction information P including the constraint condition Cz in addition to the line W2 to be converted by the generation model M, the line W2 obtained by converting the line W1 from the first language to the second language under the constraint condition Cz is generated. Therefore, it is possible to reduce a probability that the generated line W2 is excessively long or short relative to the image G.

In the third embodiment, particularly, the line W2 is generated under the constraint condition Cz corresponding to the size of the character region D in which the line W1 is arranged. Therefore, it is possible to reduce the probability that the generated line W2 is excessively long relative to the size of the character region D. That is, the line W2 is easily arranged in the character region D of the image G in the comic data Z1.

In the third embodiment, the constraint condition Cz is specified from the comic data Z1 including the line W1. That is, the comic data Z1 is shared for specifying the line W1 and specifying the constraint condition Cz. Therefore, it is possible to simplify a configuration and a process necessary for generating the line W2 as compared with a form in which the constraint condition Cz is specified from an element different from the comic data Z1.

As understood from the examples in the first to third embodiments, the song data X1 in the first embodiment, the content Y1 in the second embodiment, and the comic data Z1 in the third embodiment are comprehensively expressed as target data to be processed by the information system 100.

### D: Modifications

Specific modified aspects added to the above-exemplified aspects will be exemplified below. Two or more aspects freely selected from following examples may be combined as appropriate within a range of not being mutually contradictory.
(1) Content of a constraint condition C (Cx, Cy, Cx) related to translation using the generation model M is not limited to examples in the embodiments described above. In the following description, a character string before translation expressed in a first language is referred to as a "first character string", and a character string in a second language generated by translation of the first character string is referred to as a "second character string". The lyrics L1 in the first embodiment, the character string B1 (audio A1) in the second embodiment, and the line W1 in the third embodiment are examples of the "first character string", and the lyrics L2 in the first embodiment, the character string B2 (audio A2) in the second embodiment, and the line W2 in the third embodiment are examples of the "second character string".

### [Aspect 1]

The constraint condition C in aspect 1 includes, for example, a condition related to a size of a display surface of the display device 15 (hereinafter referred to as a "display size"). That is, the condition specifying unit 31 sets the constraint condition C according to the display size of the display device 15. For example, the constraint condition C is that the number of characters is suitable for the display size of the display device 15. As a result of translating the first character string under the constraint condition C exemplified above, the second character string having the number of characters corresponding to the display size is generated. For example, even when the first character string is common, the larger the display size, the larger the number of characters of the second character string.

### [Aspect 2]

The constraint condition C in aspect 2 includes a condition related to a character (hereinafter, referred to as an "appearing character") appearing in a content such as video or comic. That is, the condition specifying unit 31 sets the constraint condition C according to characteristics of the character appearing in the content. The characteristics of the appearing character are, for example, characteristics related to personality or appearance of the appearing character. The characteristics of the appearing character are designated by the user U operating the operation device 14, for example. For example, the constraint condition C is that the number of characters is suitable as a line of the appearing character. As a result of translating the first character string under the constraint condition C exemplified above, the second character string having the number of characters corresponding to the characteristics of the appearing character is generated. For example, even when the first character string is common, the number of characters of the second character string is different if characteristics of appearing characters are different.

### [Aspect 3]

The constraint condition C in aspect 3 includes a condition related to an overall story in a content such as video or comic. That is, the condition specifying unit 31 sets the constraint condition C according to the story of the content. The story of the content is designated by the user U operating the operation device 14, for example. For example, the constraint condition C is that the number of characters is suitable for the story of the content. As a result of translating the first character string under the constraint condition C exemplified above, the second character string having the number of characters corresponding to the story of the content is generated.

(2) In the embodiments described above, the condition specifying unit 31 specifies the constraint condition C (Cx, Cy, Cz) using the target data (song data X1, content Y1, and comic data Z1). Alternatively, a method for specifying the constraint condition C is not limited to the above example. For example, the condition specifying unit 31 may set the constraint condition C according to an instruction from the user U to the operation device 14. Specifically, the condition specifying unit 31 specifies, as the constraint condition C, a condition selected by the user U from among a plurality of conditions prepared in advance. The condition specifying unit 31 may specify, as the constraint condition C, a character string input by the user U through an operation on the operation device 14.

(3) In the second embodiment, the content Y1 including the video V and the audio A1 is exemplified, and the content Y1 may also include the video V and the character string B1. The character string B1 is, for example, a line displayed together with the video V. In a form in which the content Y1 includes the character string B1, audio recognition (Sb2) for the audio A1 is omitted.

Similarly, the content Y2 may include the video V and the character string B2. The character string B2 is, for example, a line displayed together with the video V. In a form in which the content Y2 includes the character string B2, audio synthesis (Sb6) for the character string B2 is omitted.

(4) In the third embodiment, the target data to be processed is not limited to the comic data Z1. The third embodiment is similarly applied to various publications other than comics, such as magazines and newspapers. Therefore, the character region D in which the first character string or the second character string is arranged is not limited to a bubble of a comic.

(5) In the second embodiment, the condition specifying unit 31 specifies the constraint condition Cy from the audio A1 of the content Y1, and the condition specifying unit 31 may also specify the constraint condition Cy by analyzing the video V of the content Y1. For example, the condition specifying unit 31 sets the constraint condition Cy according to a time length of a play time of the video V. For example, the number of characters that can be spoken within the play time of the video V is set as the constraint condition Cy.

In the above configuration, the video V of the content Y1 is accompanying information for specifying the constraint condition Cy. The accompanying information is information of a type different from that of the audio A1 (character string B1) and is provided in association with the audio A1. The video V according to the second embodiment is also expressed as accompanying information used for playing the audio A1, accompanying information played together with the audio A1, or accompanying information defining a condition for playing the audio A1. On the other hand, the video V (accompanying information) is not information directly designating the length of the character string B2 or information dedicated to setting the length of the character string B2.

As understood from the above examples, the condition specifying unit 31 according to certain embodiments of the present disclosure specifies the constraint condition C using the accompanying information included in the target data. The accompanying information is a comprehensive concept including the sequence of notes N of the song data X1 in the first embodiment, the video V or the audio A1 of the content Y1 in the second embodiment, and the image G of the comic data Z1 in the third embodiment.

(6) In the second embodiment, the translation process may be executed in real time in parallel with the playing of the content Y1. For example, the control device 11 executes the translation process in FIG. 6 for each speech period in parallel with the playing of the content Y1.

In the second embodiment, the constraint condition Cy may include a condition related to information not included in the character string B2. For example, the condition specifying unit 31 sets the constraint condition Cy including a condition that information detected from the video V of the content Y1 is not included in the character string B2. The information detected from the video V is information such as a name of an object included in the video V. A known object detection technique is freely adopted to detect an object included in the video V. As a result of reducing the number of characters of the character string B2 with the above configuration, time required for playing the audio A2 corresponding to the character string B2 is shortened.

(7) In the above-described embodiments, the first character string in the first language is converted into the second character string in the second language, and the first language and the second language may be the same language. That is, the generation model M may convert the first character string expressed in a specific language into the second character string in the same language under the constraint condition C. When the number of characters of the second character string exceeds the number of characters of the first character string, processing by the generation model M corresponds to "complement" of the first character string, and when the number of characters of the second character string falls below the number of characters of the first character string, the processing by the generation model M corresponds to "summary" of the first character string. Each of the above-described embodiments is similarly applied to the complement or summary of the first character string.

(8) In each of the above-described embodiments, the translation system 20 separate from the terminal device 10 generates the response information R, and the terminal device 10 may also generate the response information R. For example, the generation model M may be installed on the terminal device 10. The information acquisition unit 33 generates the response information R by processing the instruction information P generated by the information generation unit 32 with the generation model M. As understood from the above description, the information acquisition unit 33 is comprehensively expressed as an element for acquiring the response information R. "Acquisition" of the response information R includes "generation" of the response information R in addition to "reception" of the response information R.

Further, as understood from the above description, the "information processing system" in the present disclosure may be a single body of the terminal device 10 in each of the above-described embodiments, and may also be the entire information system 100 including the terminal device 10 and the translation system 20.

(9) The generation model M is not limited to a large language model exemplified in the above-described embodiments. Various models such as a recurrent neural network (RNN), a long short-term memory (LSTM), and a bidirectional encoder representations from transformers (BERT) are used as the generation model M.

(10) Functions of the terminal device 10 according to the above-described embodiments are implemented by cooperation between one or more processors constituting the control device 11 and programs stored in the storage device 12. The programs according to the above-described embodiments may be provided in a form of being stored in a computer-readable recording medium and installed in a computer. The recording medium is, for example, a non-transitory recording medium, and is preferably an optical recording medium (optical disk) such as a CD-ROM, and may also include any known type of recording medium such as a semiconductor recording medium or a magnetic recording medium. The non-transitory recording medium includes any recording medium other than transitory propagating signals, and does not exclude volatile recording media. In a configuration in which a distribution device distributes programs via the communication network 200, a recording medium that stores the programs in the distribution device corresponds to the above-described non-transitory recording medium.

### E: Appendixes

For example, following configurations can be understood from the above-exemplified embodiments.

An information processing method according to one aspect (aspect 1) of the present disclosure includes generating instruction information including a first character string expressing lyrics of a song, audio of a content, or a line of a comic in a first language and a constraint condition related to a length of a character string, and acquiring a second character string generated by a trained generation model processing the instruction information, the second character string being obtained by converting the first character string into a second language different from the first language under the constraint condition. According to the above aspect, by processing, by the generation model, the instruction information including the constraint condition related to a length of a character string in addition to the first character string to be converted, the second character string obtained by converting the first language into the second language under the constraint condition is generated. Therefore, it is possible to reduce a probability that the generated second character string is excessively long for an environment in which the second character string is output.

The "trained generation model" is a probability model that generates the second character string according to the instruction information. The generation model learns a tendency of the second character string relative to the instruction information including the first character string and the constraint condition by machine learning in advance. Specifically, the "generation model" is a generative large language model (LLM) trained specifically for a natural language processing task such as response generation. For example, a probability model implemented by a transformer model using a self-attention mechanism is exemplified as the "generation model".

The "constraint condition" is a freely selected condition related to a length of a character string. For example, in addition to a condition related to a total number of characters (the number of characters) constituting a character string, a temporal condition such as a time length in which the character string is spoken and a spatial condition such as a size in which the character string is displayed are exemplified as the "constraint condition". That is, the "length" of a character string is a concept including a time length necessary for speaking, a size necessary for display, and the like in addition to the number of characters.

In a specific example (aspect 2) of aspect 1, the first character string is the lyrics, and the constraint condition is a temporal condition related to the second character string. According to the above aspect, the lyrics are converted from the first language to the second language under the temporal constraint condition. Therefore, it is possible to reduce a probability that the generated second character string is excessively long or short relative to a sequence of notes of the song.

In a specific example (aspect 3) of aspect 2, the constraint condition is a condition corresponding to a time length of each syllable of the first character string. According to the above aspect, the second character string is generated under the constraint condition corresponding to the time length of each syllable. Therefore, it is possible to reduce a probability that a time length of the generated second character string is excessively deviated from the time length of each syllable of the first character string. That is, it is possible to generate lyrics (second character string) in the second language that allows the existing song to be easily sung.

In a specific example (aspect 4) of aspect 1, the first character string is a character string represented by the audio, and the constraint condition is a condition according to a time length of a speech period in the content. In the above aspect, the second character string is generated under the constraint condition according to the time length of the speech period in the content. Therefore, it is possible to reduce a probability that the generated second character string is excessively long for the content. That is, it is easy to temporally associate playing of video in the content with playing of the audio corresponding to the second character string.

In a specific example (aspect 5) of aspect 1, the first character string is the line, and the constraint condition is a condition according to a size of a character region in which the line is arranged in the comic. In the above aspect, the second character string is generated under the constraint condition corresponding to the size of the character region in which the line is arranged. Therefore, it is possible to reduce the probability that the generated second character string is excessively long relative to the size of the character region. That is, it is easy to arrange the second character string in the character region of the comic.

In a specific example (aspect 6) of any one of aspects 1 to 5, the information processing method further includes specifying the constraint condition from target data including the first character string, in which the instruction information includes the first character string of the target data and the constraint condition specified from the target data. In the above aspect, the constraint condition is specified from the target data including the first character string. That is, the target data is shared for specifying the first character string and specifying the constraint condition. Therefore, it is possible to simplify a configuration and a process necessary for generating the second character string as compared with a form in which the constraint condition is specified from an element different from the target data.

An information processing system according to one aspect (aspect 7) of the present disclosure includes an information generation unit configured to generate instruction information including a first character string expressing lyrics of a song, audio of a content, or a line of a comic in a first language and a constraint condition related to a length of a character string, and an information acquisition unit configured to acquire a second character string generated by a trained generation model processing the instruction information, the second character string being obtained by converting the first character string into a second language different from the first language under the constraint condition.

A program according to one aspect (aspect 8) of the present disclosure causes a computer system to function as an information generation unit configured to generate instruction information including a first character string expressing lyrics of a song, audio of a content, or a line of a comic in a first language and a constraint condition related to a length of a character string, and an information acquisition unit configured to acquire a second character string generated by a trained generation model processing the instruction information, the second character string being obtained by converting the first character string into a second language different from the first language under the constraint condition.

### REFERENCE SIGNS LIST

- 100: information system
- 10: terminal device
- 11: control device
- 12: storage device
- 13: communication device
- 14: operation device
- 15: display device
- 16: audio output device
- 20: translation system
- 31: condition specifying unit
- 32: information generation unit
- 33: information acquisition unit
- 34: output control unit

## Claims

1. An information processing method implemented by a computer system, the method comprising:
generating instruction information including a first character string expressing lyrics of a song, audio of a content, or a line of dialogue in a comic in a first language and a constraint condition related to a length of a character string; and
acquiring a second character string generated by processing the instruction information with a trained generation model, the second character string being obtained by converting the first character string into a second language different from the first language under the constraint condition.

2. The information processing method according to claim 1,
wherein the first character string is the lyrics, and
wherein the constraint condition is a temporal condition related to the second character string.

3. The information processing method according to claim 2,
wherein the constraint condition is a condition corresponding to a time length of each syllable of the first character string.

4. The information processing method according to claim 1,
wherein the first character string is a character string represented by the audio, and
wherein the constraint condition is a condition corresponding to a time length of a speech period in the content.

5. The information processing method according to claim 1,
wherein the first character string is the line, and
wherein the constraint condition is a condition corresponding to a size of a character region in which the line is arranged in the comic.

6. The information processing method according to any one of claims 1 to 5, further comprising:
specifying the constraint condition from target data including the first character string,
wherein the instruction information includes the first character string of the target data and the constraint condition specified from the target data.

7. An information processing system comprising:
an information generation unit configured to generate instruction information including a first character string expressing lyrics of a song, audio of a content, or a line of dialogue in a comic in a first language and a constraint condition related to a length of a character string; and
an information acquisition unit configured to acquire a second character string generated by processing the instruction information with a trained generation model, the second character string being obtained by converting the first character string into a second language different from the first language under the constraint condition.

8. A program that causes a computer system to function as:
an information generation unit configured to generate instruction information including a first character string expressing lyrics of a song, audio of a content, or a line of dialogue in a comic in a first language and a constraint condition related to a length of a character string; and
an information acquisition unit configured to acquire a second character string generated by processing the instruction information with a trained generation model, the second character string being obtained by converting the first character string into a second language different from the first language under the constraint condition.
